# EUROPEAN PATENT APPLICATION

(11) **EP 3 016 053 A1**
(43) Date of publication of application: **04.05.2016**
(21) Application number: 14817308.1
(22) Date of filing: 24.06.2014
(51) Int. Cl.: G06Q 30/02

(54) **SYSTEM FOR OUTPUTTING LINKED ADVERTISEMENT ON BASIS OF SMARTPHONE**

(30) Priority: 24.06.2013 KR 20130072040
(71) Applicant: Park, Gil-ju, Daejeon 305-744 (KR)
(72) Inventor: NAM, Ki-won, Seoul 135-877 (KR)
(74) Representative: Sloboshanin, Sergej
(86) International application number: PCT/KR2014/005574
(87) International publication number: WO 2014/208979

(57) **Abstract**

The present invention relates to a system for outputting linked advertisement on basis of a smartphone which is capable of displaying an advertisement so that exposure frequency may be adjusted depending on an exposure index considering cost-per-click (CPC) price, possibility of selling products, and an amount of accumulated reward money, and displaying the advertisement information with a larger font size while more increasing possibility of access of users to advertisements having priority within a predetermined priority range.

## Description

### [Technical Field]

The present invention relates to a system for outputting linked advertisement on basis of a smartphone, and more particularly, to a system for outputting linked advertisement on basis of a smartphone capable of effectively displaying an advertisement exposed in a web browser of a portable terminal.

### [Background Art]

An online advertisement market, and a shopping market are markets which have a purpose of effectively exposing advertisements or shopping information to many customers to lead them to purchase the products or services (hereinafter, collectively referred to as a "product"), and in order to achieve such purpose, various advertisement techniques or shopping encouraging techniques have been introduced.

However, there is a limit to an online space through which online advertisements may be published or exposed. Therefore, advertisers have tried to expose their advertisements through the online space.

Reflecting this fact, search portal sites including Google have developed a technique of arranging search results in a descending order of cost-per-click (CPC) price determined by conducting auction when arranging information of the search results, and registered patents therefor.

However, the above-described conventional method for exposing advertisement of the search portal site has a problem in that users pay attention only to the information having highest priority among information exposed as the search results. Actually, a click-through rate for the information having highest priority exceeds 75%, and a click-through rate for the remaining four or five companies having lower priorities is remarkably low.

Meanwhile, as an example of another advertising technique, the present applicant has filed a patent application titled "many members point adding system for buying point of the buying member and method of the same" (Korean Patent Application Nos. 10-2006-45900 and 10-2006-56655) in which reward money given to many customers when the customers access to an advertisement are combined and processed to be accumulated in real time, and the accumulated reward money are provided as a discount for payment when any one customer makes a purchase, thereby encouraging the access to the advertisement and the shopping.

To more efficiently utilize the above-described "many members point adding system for buying point of the buying member and method of the same", there is a need to increase exposure frequency of advertisement information and access frequency of users to the advertisement information.

However, the conventional method for exposing an advertisement in which the advertisement information is simply exposed in a web page displayed through a web browser has a limitation in largely increasing the exposure frequency of the advertisement information and the access of users to the advertisement information.

Further, a method of exposing about five search result information in order of priority, like Google, may be applied to a PC having a large screen, but in a case of the smartphone which has a small screen, since the search result information may not be shown properly, only the click-through rate for the search result having highest priority is increased, such that entire access to the advertisement is reduced.

### [Disclosure]

### [Technical Problem]

In consideration of the above-mentioned circumstances, it is an object of the present invention to provide a system for outputting linked advertisement on basis of a smartphone capable of displaying an advertisement so that exposure frequency may be adjusted depending on an exposure index considering cost-per-click (CPC) price, possibility of selling products, and an amount of accumulated reward money, and displaying the advertisement information with a larger font size while more increasing possibility of access of users to advertisements having priority within a predetermined priority range.

### [Technical Solution]

In order to accomplish the above objects, there is provided a system for outputting linked advertisement on basis of a smartphone, including: a user terminal 2 including an interactive advertisement exposure application 4 configured to control a display of an advertisement in a web browser including a search result display region 12 in which a predetermined search result page is displayed, and an interactive advertisement display region which is displayed in a predetermined portion of the search result display region, and displays an interactive advertisement associated with a search term of the search result display region; and an advertisement interaction control server 10 configured to receive and register advertisement information from many advertisers, extract and transmit the interactive advertisement associated with the search term of the search result display region 12 with being connected to the interactive advertisement exposure application 4 in real time, and control exposure frequency of the interactive advertisement depending on a computed exposure index.

Preferably, the interactive advertisement display region is a region which displays an advertisement transmitted by the advertisement interaction control server 10, only when an advertiser of a search advertisement displayed by selecting any one search result information in the search result display region 12 is not an advertiser of an interactive advertisement.

Preferably, the user terminal 2 is a terminal which controls a predetermined number of interactive advertisement information to be sequentially displayed in the interactive advertisement display region depending on a selection of a user.

Preferably, the advertisement interaction control server 10 classifies and stores the interactive advertisement for each search term, stores a URL of each search advertisement while matching that for each search term in advance, extracts an interactive advertisement matched to a URL of a search advertisement which is hooked, and displays the matched interactive advertisement in the interactive advertisement display region of the user terminal 2.

Preferably, the interactive advertisement display region is filled with a single interactive advertisement, and the interactive advertisement exposure application 4 controls the web browser to replace the interactive advertisement with the next interactive advertisement by an operation of a user.

Preferably, in the advertisement interaction control server 10, an advertisement display order is further included in interactive advertisement information transmitted to the user terminal 2, and the interactive advertisement exposure application 4 displays the interactive advertisement according to the advertisement display order.

Preferably, the interactive advertisement display region further displays an amount of accumulated reward money which is a part of cost-per-click of the interactive advertisement accumulated to be provided to a user as purchase subsidy.

Preferably, the interactive advertisement exposure application 4 controls the web browser, so that, when any one interactive advertisement displayed in the interactive advertisement display region is selected, a main interactive advertisement display region in which the interactive advertisement is enlarged and displayed to cover the search advertisement display region 20 is generated

Preferably, the interactive advertisement exposure application 4 includes:
an advertisement exposure control unit 36 configured to hook a search term input by a user, provide the hooked search term to the advertisement interaction control server 10, display an advertisement data transmitted from the advertisement interaction control server 10 in the web browser 34;
a URL hooking unit 38 configured to hook a URL value of the advertisement data displayed in the web browser 34; and
a platform application 32 configured to connect communication with the advertisement interaction control server 10 in real time.

Preferably, the advertisement interaction control server 10 includes: a search information communication processor 40 configured to relay a search portal server having a search engine and the interactive advertisement exposure application 4 to communicate with each other to perform data transmission and reception; and an interactive advertisement management processor 42 configured to pre-register advertisement information to be matched to and interact with the search term transmitted from the interactive advertisement exposure application 4.

Preferably, the advertisement interaction control server 10 performs a control so that, when a URL of the search advertisement transmitted from the user terminal 2 is not registered, a web page for recommended search terms, which receives recommendation for a search term matched to the search advertisement from a plurality of unspecified users, is displayed by the interactive advertisement exposure application 4.

Preferably, the exposure index is an index computed based on a descending order of cost-per-click (CPC) price, a descending order of a product selling rate, and a descending order of an amount of accumulation reward money, and the advertisement interaction control server 10 monitors the web browser and controls the interactive advertisement exposure application 4, so that an interactive advertisement having higher exposure index is exposed more frequently than the interactive advertisement having lower exposure index.

Preferably, the advertisement interaction control server 10 extracts a pre-registered advertisement information using a search database (DB) constructed in the advertisement interaction control server 10, without interacting with a search term input window of a search portal site.

Preferably, the advertisement interaction control server 10 determines whether an advertisement displayed in the search result display region 12 is an advertisement of an advertiser subscribed to an interactive advertisement display service, based on whether a URL of the advertisement displayed in the search result display region is pre-registered.

Preferably, in order for a plurality of interactive advertisement having predetermined exposure priority to be exposed at exposure frequency depending on the exposure priority, the advertisement interaction control server 10 counts the number of exposure of each interactive advertisement 30 to perform a control, so that less exposed interactive advertisement is more frequently extracted at the time of extracting the interactive advertisement.

Preferably, the interactive advertisement display region has arrows which are displayed thereon to display the next or previous interactive advertisement by the operation of the user, and a slide touch function which is set to be performed in the web browser.

Preferably, the interactive advertisement display region has arrows which are displayed at upper and lower portions to display an interactive advertisement matched to a next or previous related search term by the operation of the user, respectively, or a slide touch function in an upward direction or a downward direction which is set to be performed in the web browser.

Preferably, the advertisement display order is set so that a predetermined number of advertisement information are extracted, and the extracted advertisement information are displayed in a descending order of an amount of accumulated reward money.

Preferably, the advertisement display order is set so that a predetermined number of advertisement information are extracted, and the extracted advertisement information are displayed in a descending order of the exposure index obtained by applying an amount of accumulated reward money and a customer purchase rate.

Preferably, the advertisement display order is set so that a predetermined number of advertisement information are extracted, and the extracted advertisement information are displayed in such a manner that an advertisement information having highest exposure index is displayed with first priority, and the remainder including second priority are randomly displayed.

Preferably, the advertisement display order is set so that a predetermined number of advertisement information are extracted, and the extracted advertisement information are randomly displayed.

Preferably, the accumulated reward money is provided as the purchase subsidy when a product purchase signal of the user is generated, and the advertisement interaction control server 10 performs a control so that a predetermined amount of money is automatically accumulated at the time of reset of the accumulated reward money according to a setting request of an advertiser.

Preferably, the advertisement interaction control server 10 performs a control so that, when an interactive advertisement is displayed through a predetermine path in the interactive advertisement display region, an additional incentive reward money is displayed on a screen.

Preferably, the main interactive advertisement display region has arrows which are displayed to display the next or previous interactive advertisement by the operation of the user, or a slide touch function which is set to be performed in the web browser.

Preferably, when a signal indicating that a user selected different link information from a matched search term in the main interactive advertisement display region is received, the advertisement interaction control server 10 replaces an interactive advertisement to be displayed with an interactive advertisement matched to the newly selected link information, and transmits the interactive advertisement to the user terminal.

Preferably, the advertisement interaction control server 10 further includes a processor 50 configured to determine a search term for each URL, which matches, registers and manages a URL value of the advertisement information displayed in the web browser and the search term.

Preferably, the advertisement interaction control server 10 further includes a priority arrangement processor 52 configured to extract a search term matched to a URL value of advertisement information displayed in the web browser, and extract a predetermined interactive advertisement information which is matched to the search term and then registered, and arrange the interactive advertisement information in display order.

Preferably, the advertisement interaction control server 10 further includes: an exposure frequency computing processor 54 configured to compute exposure information of the interactive advertisement matched to the advertisement information displayed in the web browser; and a controlling unit 48 configured to control a display of the interactive advertisement so that the interactive advertisement is exposed depending on a preset exposure index.

Preferably, a plurality of recommended search term information and information on a user uploading each recommended search term are registered in the advertisement interaction control server 10 to be further displayed in the web page for the recommended search terms.

### [Advantageous Effects]

The system for outputting linked advertisement based on a smartphone according to the present invention may display every web pages based on a URL which are displayed on the user terminal in a state in which the interactive advertisement of providing purchase subsidy to users is added, thereby providing the users a wide choice of purchase, and may resister URL which does not have a search term matched thereto by receiving recommendation from the users such that objectivity may be maintained in search term registration. Further, the number and display order of the interactive advertisements which may be displayed are determined depending on the priority of the exposure index reflecting favorable conditions or circumstances of the advertiser for purchase of the users thereby securing convenience and economic feasibility.

### [Description of Drawings]

FIG. 1 is a block diagram schematically illustrating a configuration of a system for outputting linked advertisement on basis of a smartphone according to one embodiment of the present invention.
FIG. 2 is a diagram illustrating a display state of a search result in a web browser included in the system for outputting linked advertisement based on a smartphone according to one embodiment of the present invention.
FIG. 3 is a diagram illustrating a search result and interactive advertisement information displayed in the web browser through the system for outputting linked advertisement based on a smartphone according to one embodiment of the present invention.
FIG. 4 is a diagram illustrating a screen after a selection of the search result and a changed state of the interactive advertisement information displayed in the web browser through the system for outputting linked advertisement based on a smartphone according to one embodiment of the present invention.
FIG. 5 is a block diagram illustrating a main configuration of a user terminal and an advertisement interaction control server included in the system for outputting linked advertisement based on a smartphone according to one embodiment of the present invention.
FIG. 6 is a block diagram illustrating a configuration of the advertisement interaction control server included in the system for outputting linked advertisement based on a smartphone according to one embodiment of the present invention.
FIG. 7 is a flow chart illustrating a signal flow of the system for outputting linked advertisement based on a smartphone according to one embodiment of the present invention.
FIG. 8 is a flow chart illustrating a process of search term recommendation through the system for outputting linked advertisement based on a smartphone according to one embodiment of the present invention.
FIG. 9 is a diagram illustrating an enlarged state of the interactive advertisement information screen through the system for outputting linked advertisement based on a smartphone according to one embodiment of the present invention.
FIG. 10 is a diagram illustrating a configuration of a search term recommendation window included in the system for outputting linked advertisement based on a smartphone according to one embodiment of the present invention.
FIG. 11 is a diagram illustrating an exposure index computing element through the system for outputting linked advertisement based on a smartphone according to one embodiment of the present invention.
FIG. 12 is a flow chart illustrating a process of adjusting exposure frequency for each exposure index according to the system for outputting linked advertisement based on a smartphone according to one embodiment of the present invention.
FIG. 13 is a diagram illustrating a screen after a selection of a search result and a search term change state of the interactive advertisement information displayed in a web browser through a system for outputting linked advertisement on basis of a smartphone according to another embodiment of the present invention.
FIG. 14 is a diagram illustrating a processing state of accumulated reward money displayed through the system for outputting linked advertisement based on a smartphone according to another embodiment of the present invention.
FIG. 15 is a diagram illustrating a processing state of unexpected accumulated reward money displayed through the system for outputting linked advertisement based on a smartphone according to another embodiment of the present invention.
FIG. 16 is a diagram illustrating a display control state of an interactive advertisement displayed through the system for outputting linked advertisement based on a smartphone according to another embodiment of the present invention.

### [Best Mode]

Hereinafter, the present invention will be described in detail with reference to drawings.

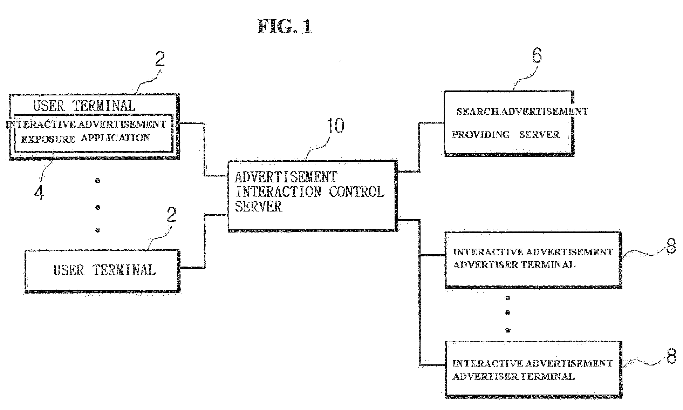

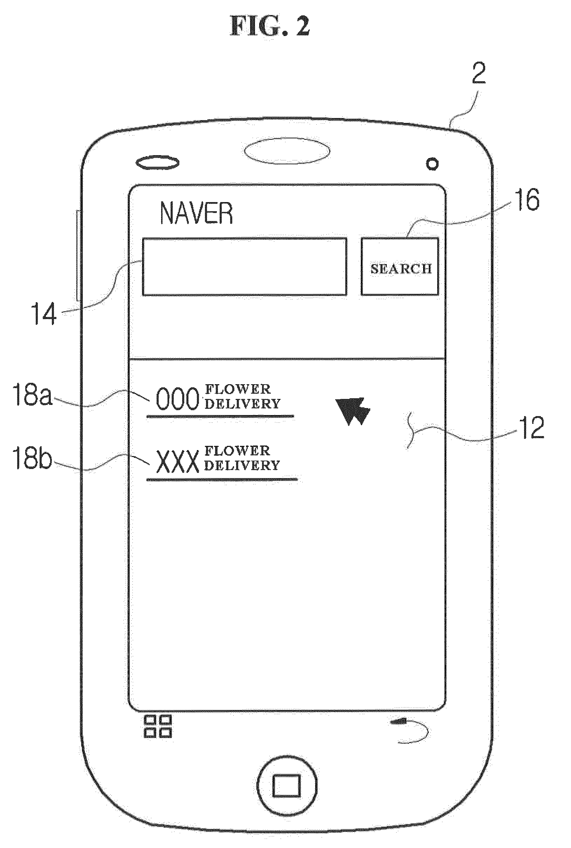

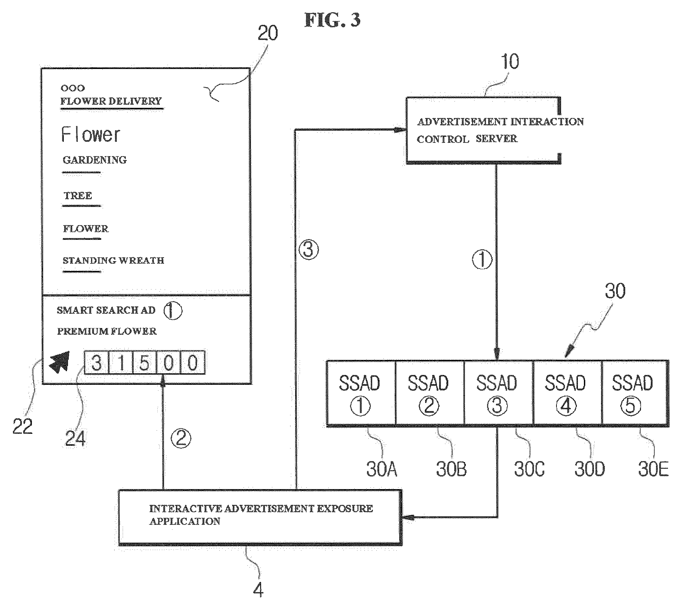

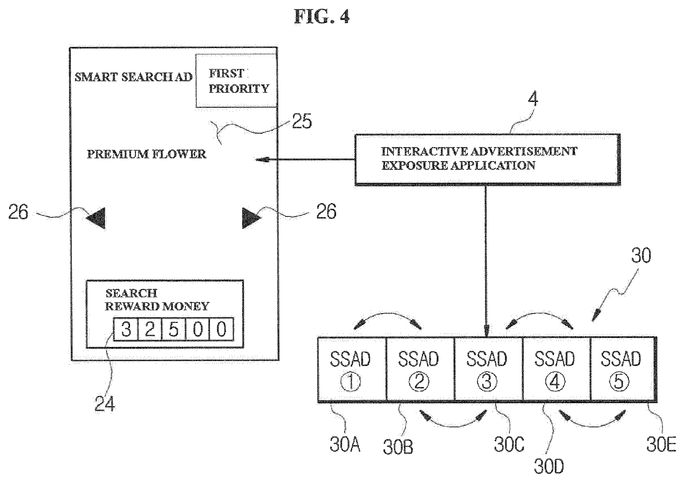

FIG. 1 is a block diagram schematically illustrating a configuration of a system for outputting linked advertisement on basis of a smartphone according to one embodiment of the present invention, FIG. 2 is a diagram illustrating a display state of a search result in a web browser included in the system for outputting linked advertisement based on a smartphone according to one embodiment of the present invention, FIG. 3 is a diagram illustrating a search result and interactive advertisement information displayed in the web browser through the system for outputting linked advertisement based on a smartphone according to one embodiment of the present invention, and FIG. 4 is a diagram illustrating a screen after a selection of the search result and a changed state of the interactive advertisement information displayed in the web browser through the system for outputting linked advertisement based on a smartphone according to one embodiment of the present invention.

Referring to FIGS. 1 to 4, the system for outputting linked advertisement based on a smartphone according to one embodiment of the present invention is a system capable of displaying advertisement so that exposure frequency may be adjusted based on an exposure index considering a descending order of cost-per-click (CPC) price, a descending order of possibility of selling products, and a descending order of an amount of accumulated reward money, and displaying the advertisement information with a larger font size while more increasing possibility of access of users to advertisements having priority within a predetermined priority range.

More specifically, the system for outputting linked advertisement based on a smartphone according to one embodiment of the present invention is a system having excellent economic feasibility and convenience, in which when a user selects any one search information among the search results displayed on a screen by an input of a search term and the selected search information is displayed on the screen, advertisement information in the same category as that of the search information are provided in order from that providing more benefits to that providing less benefits by hooking URL of the search result so that the user may access thereto, such that various discount benefits for purchase may be provided to the user in real time and the user may more quickly selectively access to only the advertisement information providing more benefits.

A display of such information processing on the screen is performed in a user terminal 2. The user terminal 2 includes an interactive advertisement exposure application 4 for performing a platform application function of communicating with a specific server, a function of controlling screen display, and a URL hooking function for a search advertisement.

More specifically, the system for outputting linked advertisement based on a smartphone according to one embodiment of the present invention includes the user terminal 2 including the interactive advertisement exposure application 4 for controlling a display of an advertisement in an web browser including a search result display region 12 in which a predetermined search result page is displayed, and an interactive advertisement display region displayed in a predetermined portion of the search result display region 12 and displaying an interactive advertisement associated with a search term of the search result display region 12.

Further, the system for outputting linked advertisement based on a smartphone according to one embodiment of the present invention includes an advertisement interaction control server 10 receiving and registering advertisement information from many advertisers, extracting and transmitting the interactive advertisement associated with the search term of the search result display region 12 with being connected to the interactive advertisement exposure application 4 in real time, and controlling exposure frequency of the interactive advertisement depending on a computed exposure index.

That is, the system for outputting linked advertisement based on a smartphone according to one embodiment of the present invention is a system for separately displaying advertisement information (that is, interactive advertisement information) in a category matched to any one search result information in a lower portion of the display region of the search result information by hooking the search result information accessed by the user, when the user accesses to the search result among the search results which are displayed by inputting a specific search term to a search portal site or a search engine interacting with the interactive advertisement exposure application 4.

In particular, since the user terminal 2 included in the system for outputting linked advertisement based on a smartphone according to one embodiment of the present invention is a portable terminal, in a case in which a plurality of interactive advertisements may be sequentially accessed by an operation of the user, when the user accesses to the advertisements, the user may pay undivided attention to each of the advertisements, and the advertisement information may be displayed with a larger font size so as not to interfere the access of the user.

Therefore, in the system for outputting linked advertisement based on a smartphone according to one embodiment of the present invention, the interactive advertisement exposure application 4 is downloaded from the advertisement interaction control server 10, and installed in the user terminal 2, and when the user inputs a specific search term (e.g. flower bouquet) to a search term input box 14 provided in a main page of any one search portal site and clicks a search button 16 in a state in which the interactive advertisement exposure application 4 is driven, hypertext with respect to, for example, ○○○ flower delivery 18a, xxx flower delivery 18b, or the like is displayed on the search result display region 12.

In this case, the search term input box 14 may be a search term input box 14 provided in a main page of any one search portal site as described above, and may also be a search term input box 14 interacting with a search database (DB) separately constructed in the advertisement interaction control server 10.

When the user selects any one of hyperlinks for ○○○ flower delivery 18a and xxx flower delivery 18b displayed in the search result display region 12, for example, ○○○ flower delivery 18a, the interactive advertisement exposure application 4 displays search advertisement data transmitted from a search advertisement providing server 6 on a search advertisement display region 20 as illustrated in FIG. 3.

In this case, the interactive advertisement exposure application 4 hooks URL information of the search advertisement and transmits the hooked URL information to the advertisement interaction control server 10. A technique of hooking the URL information of the search advertisement is a known technique.

Meanwhile, the advertisement interaction control server 10 matches each URL of search advertisements which may be displayed through a search engine to each search term in advance, and stores the matched URLs, and classifies and stores the interactive advertisement of the advertiser who desires to receive an interactive advertisement service for each search term, such that the interactive advertisement matched to the hooked search advertisement URL may be extracted and displayed in an interactive advertisement display region 22 of the user terminal 2.

In this case, the interactive advertisement which means an advertisement that a search term (which may also be referred to as category or classifier) is interacting with an advertisement displayed in the search advertisement display region 20, displays an advertisement which may not be displayed in the search advertisement display region 20 even though the user wanted to, on the same screen as that of the search advertisement.

In the drawings of the present invention, although the interactive advertisement is also expressed as a smart search advertisement, a smart search AD, or a SSAD, but all of which mean the interactive advertisement.

For example, in a case of a large portal site or large shopping mall, since the advertiser needs to pay heavy cost only just for partnership, the advertisers who rather want to provide a part of advertisement fee to consumers may request the interactive advertisement service.

Preferably, the interactive advertisement display region 22 is provided at a lower portion of the search advertisement display region 20.

As described above, the interactive advertisement provides a part of advertisement fee for supporting the user. Herein, the support is a money support, and is provided as a purchase subsidy to a customer who actually purchases the product.

That is, when the user accesses the interactive advertisement, reward money is accumulated for the search term, or the interactive advertisement, and in the case in which the user purchases a product which is classified as being matched to the search term, or a product of the interactive advertisement, the accumulated reward money is provided as the purchase subsidy.

Accordingly, accumulated reward money information 24 for the search term or the interactive advertisement is displayed in the interactive advertisement display region 22.

In addition, a means for providing the interactive advertisement information to the advertisement interaction control server 10 is an interactive advertisement advertiser terminal 8.

Preferably, since the interactive advertisement display region 22 is a region in which the advertisement transmitted by the advertisement interaction control server 10 is displayed only when the advertiser of the search advertisement displayed in the search advertisement display region 20 is not an advertiser who desires to receive the interactive advertisement service, the advertisement interaction control server 10 detects whether the advertiser of the search advertisement displayed in the search advertisement display region 20 is an advertiser who desires to receive the interactive advertisement service through the URL comparison as described above.

When any one search advertisement is not matched to a representative search term, the search advertisement is registered to the advertisement interaction control server 10 by receiving a recommendation for a search term with respect to the search advertisement from users. That is, the advertisement interaction control server 10 performs a control so that a web page for recommended search terms in which recommendation for a search term matched to the search advertisement is received from a plurality of unspecified users when the URL of the search advertisement transmitted from the user terminal 2 is not registered, is displayed by the interactive advertisement exposure application 4, which will be described below in detail.

More preferably, the advertisement interaction control server 10 extracts and transmits a plurality of interactive advertisement information 30 transmitted to the user terminal 2, the extraction of a predetermined number of the interactive advertisement information 30 and a display order of the extracted interactive advertisement information 30 are processed by a specific method by the advertisement interaction control server 10 and the specific method will be described in detail below.

Further, when the predetermined number of interactive advertisement information 30 extracted by the advertisement interaction control server 10 are transmitted to the interactive advertisement exposure application 4 of the user terminal 2, the interactive advertisement exposure application 4 stores the interactive advertisement information 30 and may be configured so that the interactive advertisement information 30 are selectively and sequentially displayed by a key operation of the user.

Since the user terminal 2 of the present invention is a portable terminal such as a smartphone, a size of its monitor for exposing web information is small. Therefore, the interactive advertisement exposure application 4 does not display the interactive advertisement information 30 provided from the advertisement interaction control server 10 on the screen at once, but sequentially displays the interactive advertisement information in the interactive advertisement display region 22 depending on a selection of the user.

That is, when a first smart search advertisement 30A is displayed in the interactive advertisement display region 22, the interactive advertisement exposure application 4 controls the web browser so that the next interactive advertisement information (e.g. second smart search advertisement 30B) may be displayed instead of the first smart search advertisement 30A by the operation of the user.

Likewise, the user may continuously control a key to display third, fourth, fifth smart search advertisements 30C, 30D and 30E on the screen, and may also display the fourth smart search advertisement 30D on the screen by controlling the key in an opposite direction while the fifth smart search advertisement 30E is displayed.

That is, in the advertisement interaction control server 10, the interactive advertisement information 30 transmitted to the user terminal 2 further includes advertisement display order information, and the interactive advertisement exposure application 4 controls the display of the interactive advertisement information 30 according to the advertisement display order information.

Herein, in order for the user to perform operation for displaying the next or previous interactive advertisement information 30 in the interactive advertisement display region 22, an arrow may be displayed in the interactive advertisement display region 22 or a slide touch function may be set to be performed in the web browser.

Each interactive advertisement information 30A, 30B, 30C, 30D, and 30E include an accumulated reward money information 24 for providing a part of cost-per-click of the interactive advertisement which is accumulated to the user as the purchase subsidy, such that the user clicks any one of the interactive advertisement information 30A, 30B, 30C, 30D, and 30E to read detailed information thereof while sequentially reading the plurality of interactive advertisement information 30.

When the user selects any one of the plurality of interactive advertisement information 30A, 30B, 30C, 30D, and 30E by touching, the interactive advertisement exposure application 4 controls the web browser so that a main interactive advertisement display region 25 in which the interactive advertisement is enlarged and displayed to cover the search advertisement display region 20 is generated as illustrated in FIG. 4.

Further, arrows 26 for displaying the next or previous interactive advertisement by the operation of the user are also displayed in the main interactive advertisement display region 25 or the slide touch function is set to be performed in the web browser.

The advertisement display order may be set according to various arrangement order condition. However, preferably, it is also possible to set the advertisement display order so that a predetermined number of extracted advertisement information are displayed in a descending order of an amount of accumulated reward money. This also will be described in detail below.

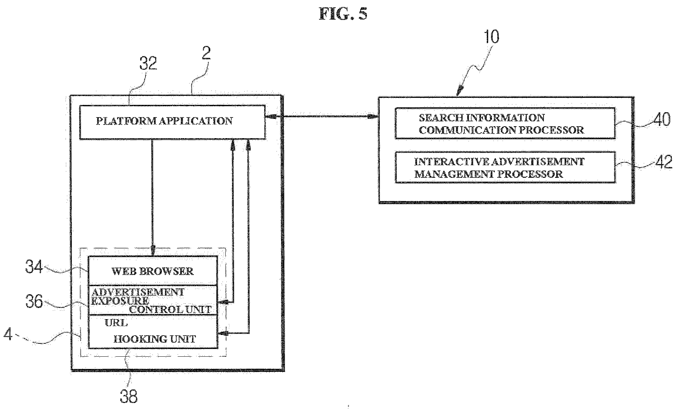

FIG. 5 is a block diagram illustrating a main configuration of a user terminal and an advertisement interaction control server included in the system for outputting linked advertisement based on a smartphone according to one embodiment of the present invention.

Referring to FIG. 5, the system for outputting linked advertisement based on a smartphone according to one embodiment of the present invention includes the user terminal 2, and the user terminal 2 includes the interactive advertisement exposure application 4 for controlling the user terminal 2 to communicate with the advertisement interaction control server 10 so that the advertisement information displayed on the screen of the user terminal 2 is provided to the server, and a specific advertisement information is received from the server and displayed on the screen.

In this case, the interactive advertisement exposure application 4 includes: an advertisement exposure control unit 36 performing a control to hook the search term input by the user, provide the hooked search term to the advertisement interaction control server 10, and then display the advertisement data transmitted from the advertisement interaction control server 10 in the web browser 34; a URL hooking unit 38 for hooking an URL value of the advertisement data displayed in the web browser 34; and a platform application 32 for connecting communication with the advertisement interaction control server 10 in real time.

Further, the advertisement interaction control server 10 includes: a search information communication processor 40 relaying a search portal server having a search engine and the interactive advertisement exposure application 4 to communicate with each other to perform data transmission and reception; and an interactive advertisement management processor 42 pre-registering the advertisement information to be matched to and interacting with the search term transmitted from the interactive advertisement exposure application 4.

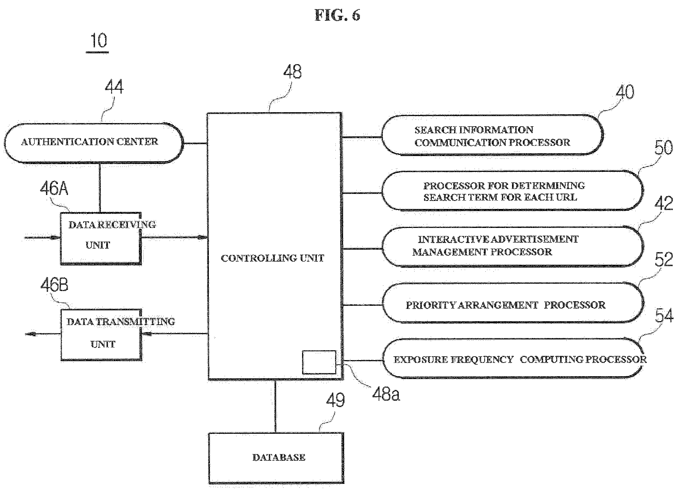

FIG. 6 is a block diagram illustrating a configuration of the advertisement interaction control server included in the system for outputting linked advertisement based on a smartphone according to one embodiment of the present invention.

Referring to FIG. 6, the advertisement interaction control server 10 included in the system for outputting linked advertisement based on a smartphone according to one embodiment of the present invention includes a general authentication center (AUC) 44 for authenticating the user, and a data receiving unit 46A and a data transmitting unit 46B for transmitting and receiving data to and from the user terminal 2 therein.

Further, the advertisement interaction control server 10 includes: the search information communication processor 40 relaying a search portal server having a search engine and the interactive advertisement exposure application 4 to communicate with each other to perform data transmission and reception; and the interactive advertisement management processor 42 pre-registering the advertisement information to be matched to and interacting with the search term transmitted from the interactive advertisement exposure application 4.

Further, the advertisement interaction control server 10 further includes a processor 50 for determining a search term for each URL, which matches, registers and manages URL value of the advertisement information displayed in the web browser and the search term.

Further, the advertisement interaction control server 10 further includes: a priority arrangement processor 52 extracting the search term matched to the URL value of the advertisement information displayed in the web browser and extracting a predetermined interactive advertisement information which is matched to the search term and then registered, and arranging the interactive advertisement information in display order; an exposure frequency computing processor 54 computing the exposure information of the interactive advertisement matched to the advertisement information displayed in the web browser; and a controlling unit 48 controlling the display of the interactive advertisement so that the interactive advertisement is exposed depending on a preset exposure index.

Meanwhile, the advertisement interaction control server 10 includes a database 50 for storing the interactive advertisement exposure application 4 to be downloadable to the user terminal 2, and storing URL matching information of the advertisement information for each search term, matching information of the interactive advertisement information for each search term, and the interactive advertisement information.

Functions and operations of the system for outputting linked advertisement based on a smartphone according to one embodiment of the present invention having the above-described configuration will be described in detail with reference to the accompanying drawings.

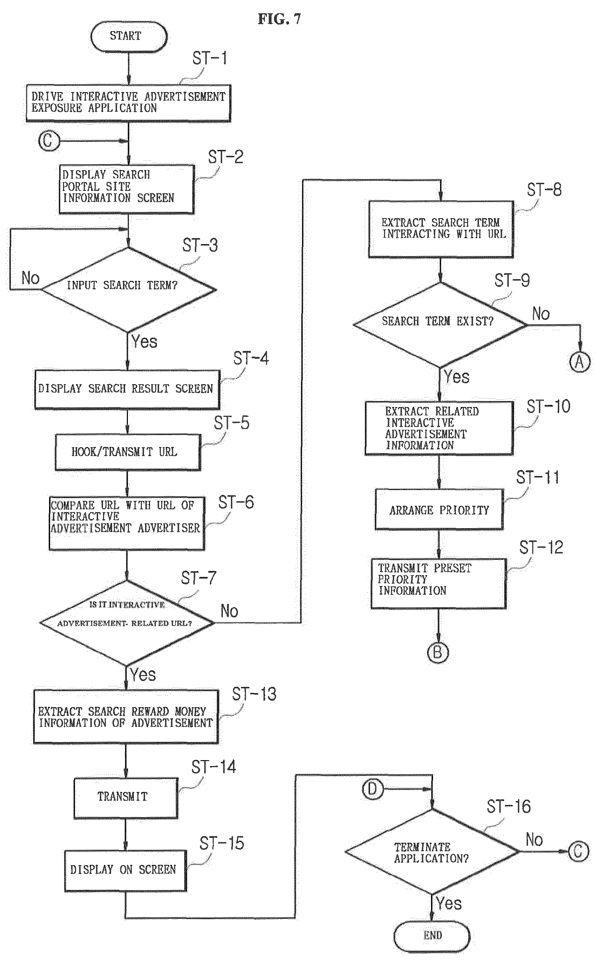

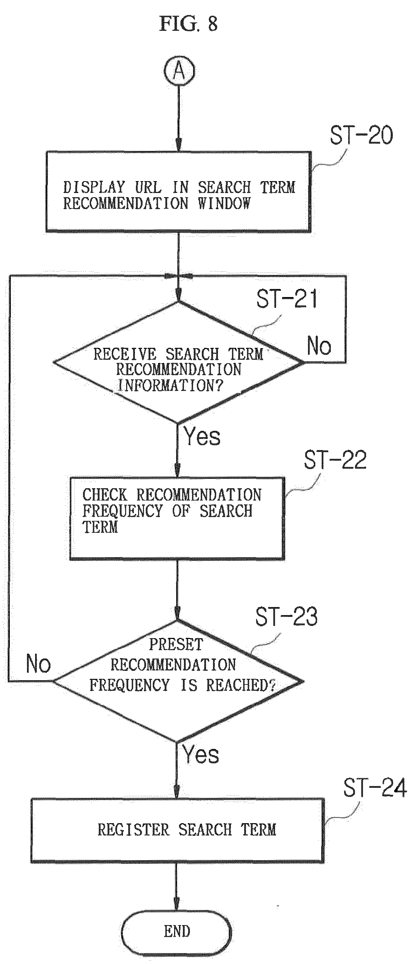

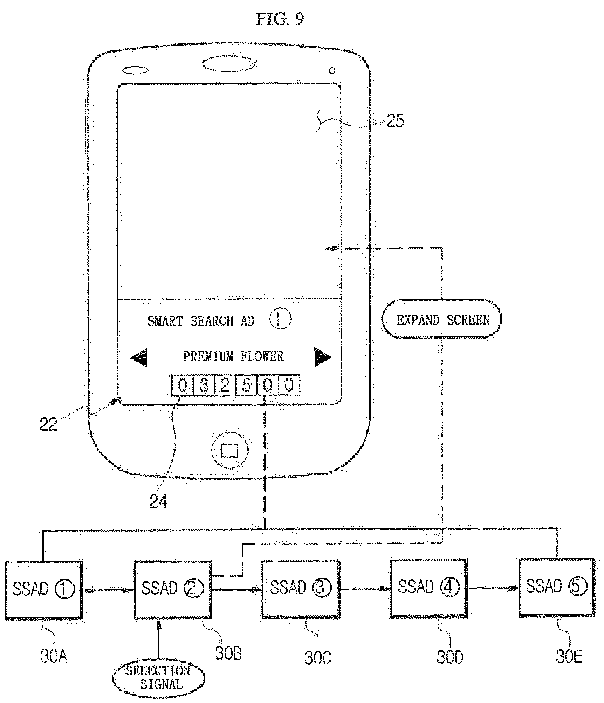

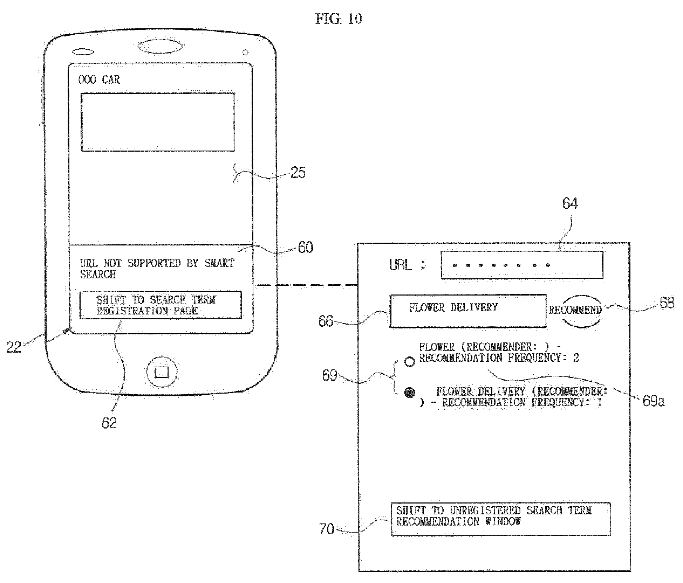

FIG. 7 is a flow chart illustrating a signal flow of the system for outputting linked advertisement based on a smartphone according to one embodiment of the present invention, FIG. 8 is a flow chart illustrating a process of search term recommendation through the system for outputting linked advertisement based on a smartphone according to one embodiment of the present invention, FIG. 9 is a diagram illustrating an enlarged state of the interactive advertisement information screen through the system for outputting linked advertisement based on a smartphone according to one embodiment of the present invention, and FIG. 10 is a diagram illustrating a configuration of a search term recommendation window included in the system for outputting linked advertisement based on a smartphone according to one embodiment of the present invention.

In reviewing signal flow through the system for outputting linked advertisement based on a smartphone according to one embodiment of the present invention, first, the interactive advertisement exposure application 4 is downloaded from the advertisement interaction control server 10 and then installed in the user terminal 2, and the interactive advertisement exposure application 4 is driven.

In this state, when a user accesses to a main page of any one search portal site, inputs a specific search term (e.g. flower bouquet) in the search term input box 14 of the main page, and clicks the search button 16, in the search result display region 12, hypertexts with respect to a plurality of search result information (e.g. ○○○ flower delivery 18a, xxx flower delivery 18b, and the like) are displayed.

Then, the user may select any one hyperlink (e.g. ○○○ flower delivery 18a) among the plurality of hyperlinks displayed in the search result display region 12. Thus, when the user selects the specific hyperlink, the interactive advertisement exposure application 4 displays the search advertisement data transmitted from the search advertisement providing server 6 in the search advertisement display region 20.

In this case, the interactive advertisement exposure application 4 hooks URL information of the search advertisement and transmits the hooked URL information to the advertisement interaction control server 10.

The advertisement interaction control server 10 determines whether the advertiser of the search advertisement displayed in the search advertisement display region 20 is an advertiser who desires to receive the interactive advertisement service, based on the hooked search advertisement URL. That is, when the advertiser of the advertisement displayed in the search advertisement display region 20 is an advertiser using the interactive advertisement display service of the present invention, in the interactive advertisement display region 22, only the accumulated reward money information of the advertisement product displayed in the search advertisement display region 20 is displayed, and the interactive advertisement information is not displayed.

On the other hand, when the advertiser of the search advertisement displayed in the search advertisement display region 20 is not an advertiser who desires to receive the interactive advertisement service, the advertisement interaction control server 10 extracts the interactive advertisement information 30 matched to the search term. Preferably, a predetermined number of interactive advertisement information 30 is extracted.

Further, the advertisement interaction control server 10 determines a display order of the extracted interactive advertisement information 30 by a specific method to be described below, and transmits the predetermined number of interactive advertisement information 30 to the interactive advertisement exposure application 4 of the user terminal 2.

Then, the interactive advertisement exposure application 4 stores the interactive advertisement information 30 and the display order information, such that the interactive advertisement information 30 may be selectively and sequentially displayed, by a key operation of the user.

Herein, in order for the user to perform operation for displaying the next or previous interactive advertisement information 30 in the interactive advertisement region 22, an arrow may be displayed in the interactive advertisement display region 22 or a slide touch function may be set to be performed in the web browser.

Each interactive advertisement information 30A, 30B, 30C, 30D, and 30E include an accumulated reward money information 24 for providing a part of cost-per-click of the interactive advertisement which is accumulate to the user as the purchase subsidy, such that the user clicks any one of the interactive advertisement information 30A, 30B, 30C, 30D, and 30E to read detailed information thereof while sequentially reading the plurality of interactive advertisement information 30.

When the user selects any one of the plurality of interactive advertisement information 30A, 30B, 30C, 30D, and 30E by touching, the interactive advertisement exposure application 4 controls the web browser so that a main interactive advertisement display region 25 in which the interactive advertisement is enlarged and displayed to cover the search advertisement display region 20 is generated, as illustrated in FIG. 9.

Preferably, the arrows 26 for displaying the next or previous interactive advertisement by the operation of the user are also displayed in the main interactive advertisement display region 25 or the slide touch function is set to be performed in the web browser.

If the URL of the search advertisement received by the advertisement interaction control server 10 from the user terminal 2 is in a state in which it is not matched to any search term and not registered, the advertisement interaction control server 10 displays the search advertisement URL in a search term recommendation window 60.

The search term recommendation window 60 includes a search term registration page shifting button 62, and when the search term registration page shifting button 62 is clicked, a search advertisement URL information display box 64 is displayed, and a matched search term input box 66 and a recommendation button 68 are displayed.

Further, the advertisement interaction control server 10 receives a recommended search term registration with respect to the search advertisement URL from a plurality of users, computes the recommendation frequency generated for the search term, and when the recommendation frequency exceeds a predetermined frequency, the search term is matched to the search advertisement URL to be registered.

For example, with respect to the specific search advertisement URL which is not yet matched to a search term, in a case in which any one user registers a search term recommendation for "mountain-climbing equipment," when a plurality of users recommend that the search term "mountain-climbing equipment" is well matched to the search advertisement of the URL, the advertisement interaction control server 10 registers the search term for the search advertisement URL.

Preferably, recommendation information 69 displays not only a search term, but also recommender information 69a to promote the recommendation activity. Further, a shifting button 70 for shifting to a web page in which the users may recommend the search terms for more search advertisement URL in addition to the search advertisement URL is displayed in a lower portion of the page.

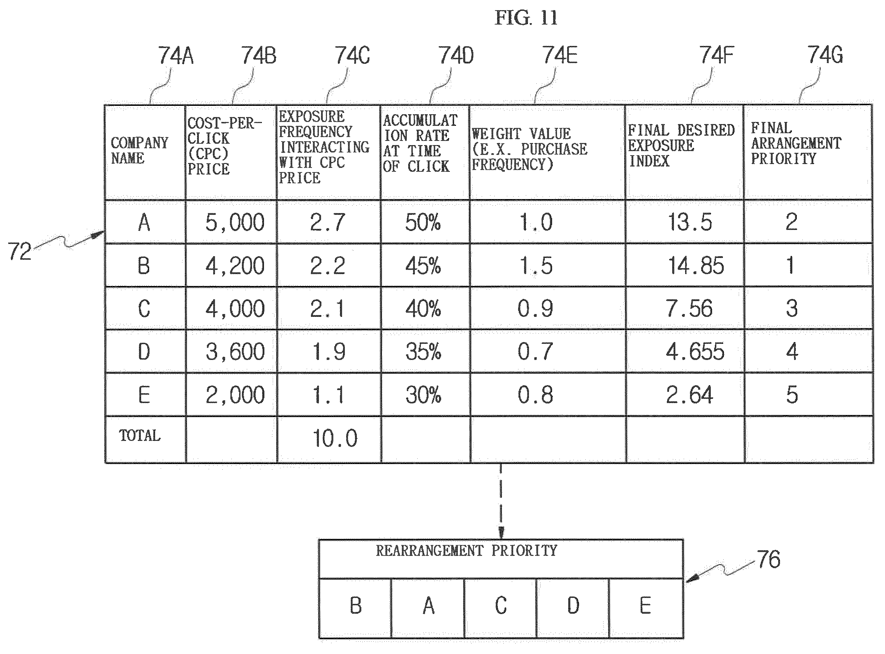

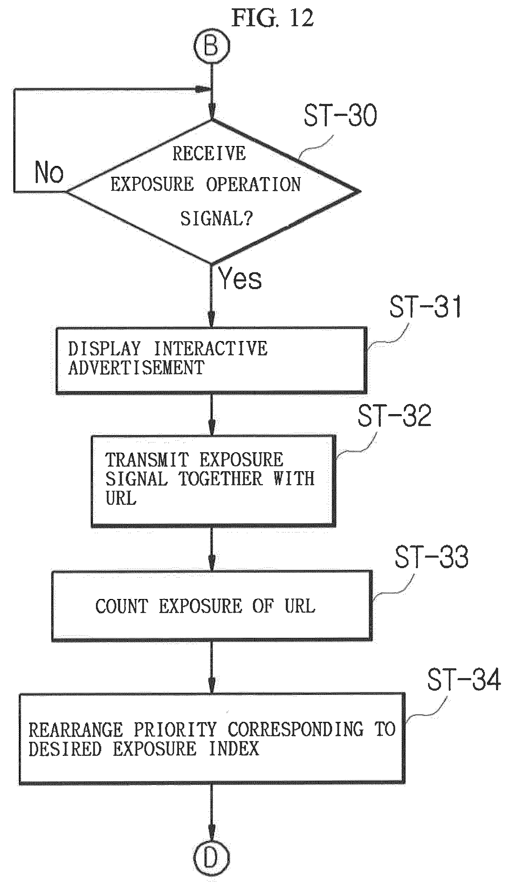

FIG. 11 is a diagram illustrating an exposure index computing element through the system for outputting linked advertisement based on a smartphone according to one embodiment of the present invention, and FIG. 12 is a flow chart illustrating a process of adjusting exposure frequency for each exposure index according to the system for outputting linked advertisement based on a smartphone according to one embodiment of the present invention.

Referring to FIGS. 11 and 12, the interactive advertisement information 30 included in the system for outputting linked advertisement based on a smartphone according to one embodiment of the present invention, preferably, may be arranged in a descending order of CPC price, in a descending order of product selling rate, in a descending order of an amount of accumulated reward money, or in a descending order of exposure index.

Herein, the cost-per-click (CPC) means an advertisement cost to be paid by an advertiser of the advertisement when a customer clicks the advertisement one time, and it is preferable for an advertisement agency (e.g. Google, or the like) that the advertisements are exposed in a descending order of CPC bid.

The accumulated reward money corresponds to a part of the advertisement cost to be paid by the advertiser which is accumulated when the user accesses the product or a product advertisement included in the search term, and then provided to the customer who purchases the product as purchase subsidy. Accordingly, when the interactive advertisements are arranged in a descending order of an amount of the accumulated reward money, a possibility of purchase is increased.

Arranging the interactive advertisements in a descending order of product selling rate corresponds to arranging the product advertisements in order from that having substantially higher selling rate to that having less selling rate, in which many customers actually make purchase decision.

Preferably, in the system for outputting linked advertisement based on a smartphone according to one embodiment of the present invention, the advertisement interaction control server 10 monitors the web browser and controls the interactive advertisement exposure application 4 such that the interactive advertisements are arranged in a descending order of exposure index, the exposure index being computed based on all the CPC price, the product selling rate, and the amount of accumulation reward money, and the interactive advertisement having higher exposure index is allowed to be exposed more frequently than the interactive advertisement having lower exposure index by counting the number of clicks by the users for each exposure index.

An exposure index computation table 74 includes a company name 74A, cost-per-click (CPC) price 74B, exposure frequency interacting with CPC price 74C which indicates the frequency at which the advertisement is exposed in proportion to CPC price, information on a money accumulation rate at the time of click 74D, weight value information (for example, seller reliability index based on selling rate or the like) 74E, final desired exposure index 74F, and final arrangement priority information 74G rearranged based on the exposure index, and the interactive advertisement information includes a rearrangement priority information 76.

Preferably, with regard to the advertisement display order, a predetermined number of advertisement information may be extracted and then randomly displayed, or only an advertisement information having top priority in arrangement may be designated, and the remainder may be randomly and arbitrarily rearranged by the advertisement interaction control server 10 to be transmitted to the user terminal 2.

That is, with regard to the advertisement display order, a predetermined number of advertisement information may be extracted and the extracted advertisement information may be set to be displayed in such a manner that the advertisement information having highest exposure index is displayed with top priority, and the remainder are randomly displayed.

More preferably, in order for the user to access to all the interactive advertisement information 30 transmitted from the advertisement interaction control server 10, the interactive advertisement information 30 transmitted to the user terminal 2 should not be simply arranged only based on a descending order of the amount of accumulated reward money.

Meanwhile, the advertisement interaction control server 10 included in the system for outputting linked advertisement based on a smartphone according to another embodiment of the present invention may interact with the interactive advertisement exposure application 4 to control the exposure frequency.

That is, the advertisement interaction control server 10 receives the exposure operation signal of the user for the specific interactive advertisement from the interactive advertisement exposure application 4, and counts the exposure operation signal to perform a control such that less exposed interactive advertisement is more frequently extracted at the time of extracting the interactive advertisement in order for a plurality of interactive advertisement having predetermined exposure priority according to FIG. 11 to be exposed at the exposure frequency depending on the exposure priority.

To this end, the advertisement interaction control server 10 counts the exposure frequency of each of the interactive advertisements 30.

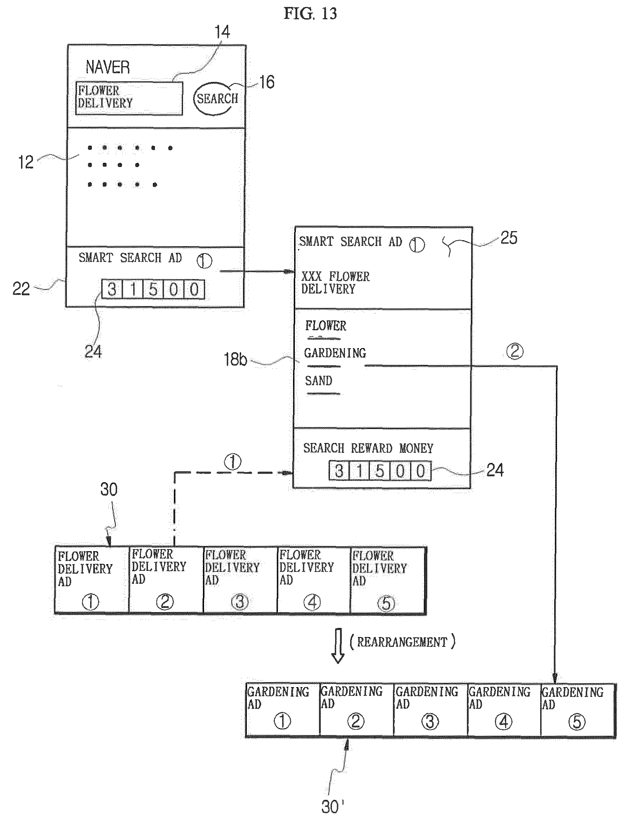

FIG. 13 is a diagram illustrating a screen after a selection of a search result and a search term change state of the interactive advertisement information displayed in a web browser through a system for outputting linked advertisement on basis of a smartphone according to another embodiment of the present invention.

Referring to FIG. 13, in the system for outputting linked advertisement based on a smartphone according to another embodiment of the present invention, when a signal indicating that the user selected different link information (e.g. gardening) from the matched search term (e.g. flower delivery) in the main interactive advertisement display region 25 is received, the advertisement interaction control server 10 replaces an interactive advertisement 30 to be displayed with an interactive advertisement 30' matched to the newly selected link information, and transmits the same to the user terminal 2.

That is, when the user accesses to a main page of any one search portal site, inputs a specific search term (e.g. flower bouquet) in the search term input box 14 of the main page, and clicks the search button 16, in the search result display region 12, hypertexts with respect to a plurality of search result information are displayed.

In this state, when the user selects any one hyperlink (e.g. ○○○ flower delivery) among the plurality of hyperlinks displayed in the search result display region 12, the interactive advertisement exposure application 4 accesses to the website of the ○○○ flower delivery.

Then, the interactive advertisement exposure application 4 hooks URL information of the search advertisement (e.g. ○○○ flower delivery) and transmits the hooked URL information to the advertisement interaction control server 10.

As a result, the advertisement interaction control server 10 determines whether there is a search term registered while being matched to the URL in advance through the hooked URL of the search advertisement, extracts a predetermined number of interactive advertisements 30 having high priority among a plurality of interactive advertisements 30 classified as being matched to the search term, and transmits the extracted interactive advertisements 30 to the user terminal 2 to be displayed.

In this case, the interactive advertisement 30 is displayed in the interactive advertisement display region 22 at the lower portion, and may be sequentially replaced with the interactive advertisement 30 having next priority depending on the selection of the user. When the user clicks any one advertisement 30 (e.g. xxx flower delivery) exposed in the interactive advertisement display region 22 in order to read detailed information of the interactive advertisement 30, the detailed information of the interactive advertisement is displayed in the main interactive advertisement display region 25.

In this state, when the user selects any one (e.g. gardening) among the detailed information of the interactive advertisement displayed in the main interactive advertisement display region 25, the advertisement interaction control server 10 changes the search term matched to the interactive advertisement (e.g. flower delivery) to a new search term (e.g. gardening), and extracts the interactive advertisement matched to the search term (e.g. gardening) to be transmitted to the user terminal 2.

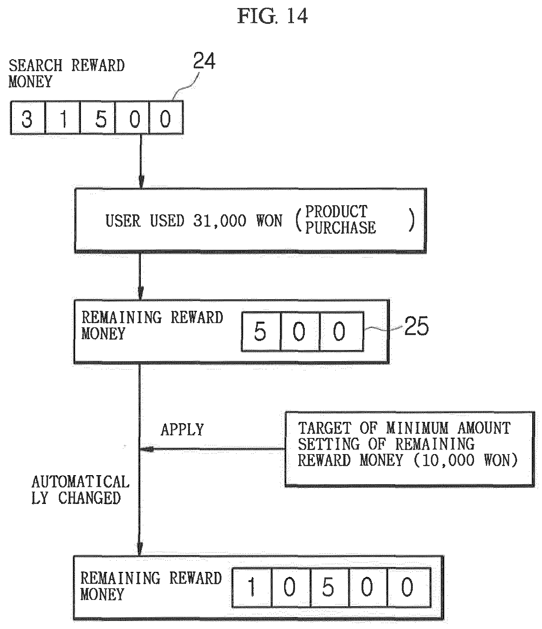

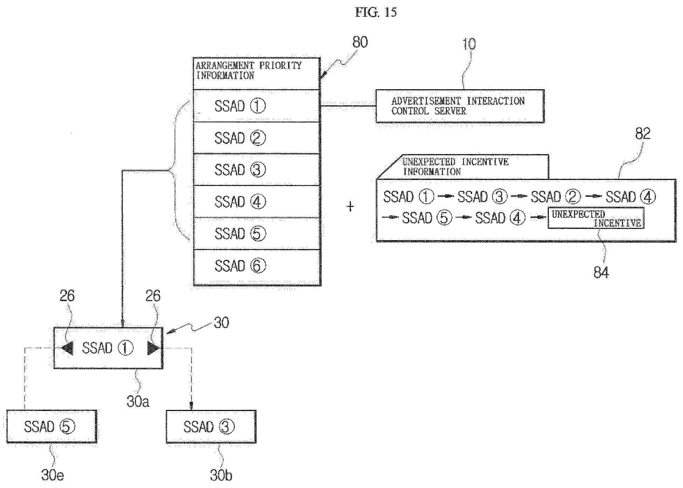

FIG. 14 is a diagram illustrating a processing state of accumulated reward money displayed through the system for outputting linked advertisement based on a smartphone according to another embodiment of the present invention, and FIG. 15 is a diagram illustrating a processing state of unexpected accumulated reward money displayed through the system for outputting linked advertisement based on a smartphone according to another embodiment of the present invention.

Referring to FIGS. 14 and 15, in the system for outputting linked advertisement based on a smartphone according to another embodiment of the present invention, with regard to the accumulated reward money information 24 displayed in the interactive advertisement display region 22, when any one user purchases a product of the interactive advertisement, the accumulated reward money is provided as purchase subsidy to the user. Therefore, when the purchase is made, the accumulated reward money is reset to be zero (0) state.

In this case, in the system for outputting linked advertisement based on a smartphone according to another embodiment of the present invention, the advertisement interaction control server 10 may perform a control so that a predetermined amount of money is automatically accumulated at the time of reset of the accumulated reward money depending on a setting of the advertiser.

Further, according to the system for outputting linked advertisement based on a smartphone according to another embodiment of the present invention, in a case in which the accumulated reward money is not completely reset but reduced below a predetermined amount, the advertiser may perform a setting in the advertisement interaction control server 10 such that a minimum amount of remaining reward money is always maintained.

That is, in a case in which 20,000 won of accumulated reward money is subtracted from 20,500 won of the accumulated reward money due to the purchase by the user, and the remaining accumulated reward money is 500 won, when the advertiser of the product sets the minimum amount of the remaining accumulated reward money as 10,000 won, the accumulated reward money becomes 10,500 won by adding 10,000 won to the accumulated reward money of 500 won. That is, when the amount of accumulated reward money is below 10,000 won, the advertisement interaction control server 10 automatically adds 10,000 won to the accumulated reward money and displays the sum.

In addition, according to the system for outputting linked advertisement based on a smartphone according to another embodiment of the present invention, information on provision of unexpected incentive 84 is included in the interactive advertisement to be provided, thereby inducing the user access to all the interactive advertisement 30 which may be exposed in the interactive advertisement display region 22, and overlappingly access to the same interactive advertisement 30.

That is, the advertisement interaction control server 10 includes arrangement priority information 80 of a plurality of interactive advertisements having preset arrangement priority, some interactive advertisements 30 among the interactive advertisements included in the arrangement priority information 80 may be exposed to the user terminal 2.

When it is assumed that the interactive advertisement 30 having fifth priority is provided to be exposed to the user terminal 2, and the interactive advertisements (smart search advertisement (SSAD)) are arranged in order of first priority, third priority, second priority, fourth priority, and fifth priority thereof, the advertisement interaction control server 10 may be set so that the additional incentive reward money is displayed on the screen when the interactive advertisement 30 displayed in the interactive advertisement display region 22 is accessed through a predetermine path.

For example, when a key operation by the user of touching the arrow 26 to sequentially expose the interactive advertisements in order of first priority, third priority, second priority, fourth priority, and fifth priority thereof, and fourth priority again, is generated, then a preset unexpected incentive 84 information is displayed in the interactive advertisement display region 22.

Accordingly, an unexpected incentive path information 82 is stored in the advertisement interaction control server 10, as a result, the user may access all the accessible interactive advertisement 30 through the interactive advertisement display region 22, and further, may continuously and overlappingly access to the same interactive advertisement 30.

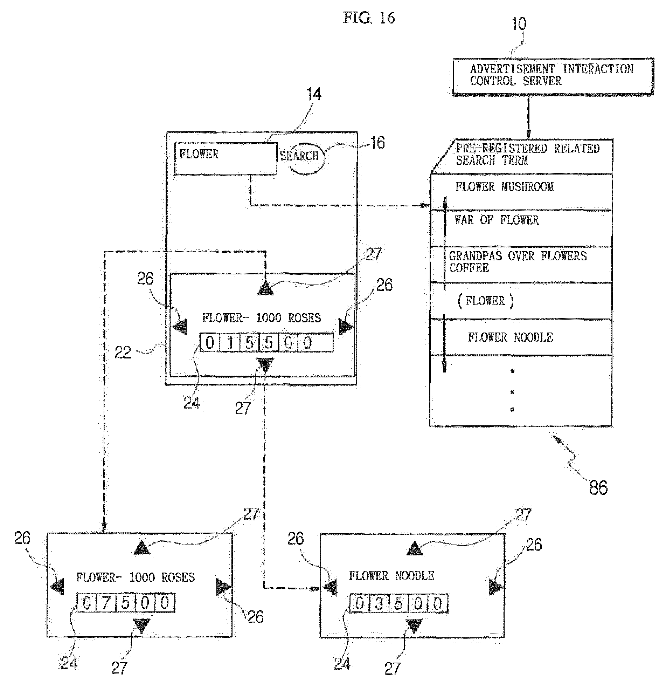

FIG. 16 is a diagram illustrating a display control state of an interactive advertisement displayed through the system for outputting linked advertisement based on a smartphone according to another embodiment of the present invention.

Referring to FIG. 16, in the system for outputting linked advertisement based on a smartphone according to another embodiment of the present invention, when any one search term, for example, "flower," is input in the search term input box 14, related search term information 86 may be displayed on the screen through the search term input box 14, similar to the case of being exposed in the search term input window of existing search portal site.

Preferably, in the system for outputting linked advertisement based on a smartphone according to another embodiment of the present invention, the related search term information 86 is constructed in the advertisement interaction control server 10, and the related search term of the related search term information 86 is selectively displayed in the search term input box 14 through the interactive advertisement exposure application 4 installed in the user terminal 2.

To this end, in the interactive advertisement display region 22, arrows 27 for displaying an interactive advertisement matched to the next or previous related search term by the operation of the user are displayed at upper and lower portions of the interactive advertisement display region, respectively, or the slide touch function in an upward direction and a downward direction is set to be performed in the web browser.

That is, when the user inputs a search term "flower" in the search term input box 14 and then clicks the search button 16, the arrows 26 may be provided or the web browser may be controlled so that the slide touch function is provided such that a predetermined number of interactive advertisements classified as being matched to the search term "flower" are sequentially displayed in the interactive advertisement display region 22 by the operation of the user. In addition, in the case of operating the arrows 27 displayed at the upper and lower portions, the search term input in the search term input box 14 may be replaced with the related search term of "flower" such as "Grandpas over flowers coffee" or "flower noodle".

Accordingly, the system for outputting linked advertisement based on a smartphone according to another embodiment of the present invention may display the interactive advertisement interacting with the related search term very quickly.

Meanwhile, the system for outputting linked advertisement based on a smartphone according to another embodiment of the present invention may also perform the above described related search term function not only in the search portal site, but also using database (DB) thereof. That is, the advertisement interaction control server 10 may not interact with the search term input window of the search portal site, but may extract the pre-registered advertisement information using the search DB constructed in the advertisement interaction control server 10.

Meanwhile, the system for outputting linked advertisement based on a smartphone according to an embodiment of the present invention is not limited to above described embodiment, but may be variously modified without departing from the scope of the technical gist of the present invention.

### [Description of Reference Numerals]

2: user terminal
4: interactive advertisement exposure application
6: search advertisement providing server
8: interactive advertisement advertiser terminal
10: advertisement interaction control server

## Claims

1. A system for outputting linked advertisement on basis of a smartphone, comprising:
a user terminal 2 including an interactive advertisement exposure application 4 configured to control a display of an advertisement in a web browser including a search result display region 12 in which a predetermined search result page is displayed, and an interactive advertisement display region which is displayed in a predetermined portion of the search result display region, and displays an interactive advertisement associated with a search term of the search result display region; and
an advertisement interaction control server 10 configured to receive and register advertisement information from many advertisers, extract and transmit the interactive advertisement associated with the search term of the search result display region 12 with being connected to the interactive advertisement exposure application 4 in real time, and control exposure frequency of the interactive advertisement depending on a computed exposure index.

2. The system for outputting linked advertisement of claim 1, wherein the interactive advertisement display region is a region which displays an advertisement transmitted by the advertisement interaction control server 10, only when an advertiser of a search advertisement displayed by selecting any one search result information in the search result display region 12 is not an advertiser of an interactive advertisement.

3. The system for outputting linked advertisement of claim 1, wherein the user terminal 2 is a terminal which controls a predetermined number of interactive advertisement information to be sequentially displayed in the interactive advertisement display region depending on a selection of a user.

4. The system for outputting linked advertisement of claim 1, wherein the advertisement interaction control server 10 classifies and stores the interactive advertisement for each search term, stores a URL of each search advertisement while matching that for each search term in advance, extracts an interactive advertisement matched to a URL of a search advertisement which is hooked, and displays the matched interactive advertisement in the interactive advertisement display region of the user terminal 2.

5. The system for outputting linked advertisement of claim 1, wherein the interactive advertisement display region is filled with a single interactive advertisement, and the interactive advertisement exposure application 4 controls the web browser to replace the interactive advertisement with the next interactive advertisement by an operation of a user.

6. The system for outputting linked advertisement of claim 1, wherein in the advertisement interaction control server 10, an advertisement display order is further included in interactive advertisement information transmitted to the user terminal 2, and the interactive advertisement exposure application 4 displays the interactive advertisement according to the advertisement display order.

7. The system for outputting linked advertisement of claim 1, wherein the interactive advertisement display region further displays an amount of accumulated reward money which is a part of cost-per-click of the interactive advertisement accumulated to be provided to a user as purchase subsidy.

8. The system for outputting linked advertisement of claim 1, wherein the interactive advertisement exposure application 4 controls the web browser, so that, when any one interactive advertisement displayed in the interactive advertisement display region is selected, a main interactive advertisement display region in which the interactive advertisement is enlarged and displayed to cover the search advertisement display region 20 is generated

9. The system for outputting linked advertisement of claim 1, wherein the interactive advertisement exposure application 4 comprises:
an advertisement exposure control unit 36 configured to hook a search term input by a user, provide the hooked search term to the advertisement interaction control server 10, display an advertisement data transmitted from the advertisement interaction control server 10 in the web browser 34;
a URL hooking unit 38 configured to hook a URL value of the advertisement data displayed in the web browser 34; and
a platform application 32 configured to connect communication with the advertisement interaction control server 10 in real time.

10. The system for outputting linked advertisement of claim 1, wherein the advertisement interaction control server 10 comprises:
a search information communication processor 40 configured to relay a search portal server having a search engine and the interactive advertisement exposure application 4 to communicate with each other to perform data transmission and reception; and
an interactive advertisement management processor 42 configured to pre-register advertisement information to be matched to and interact with the search term transmitted from the interactive advertisement exposure application 4.

11. The system for outputting linked advertisement of claim 1, wherein the advertisement interaction control server 10 performs a control so that, when a URL of the search advertisement transmitted from the user terminal 2 is not registered, a web page for recommended search terms, which receives recommendation for a search term matched to the search advertisement from a plurality of unspecified users, is displayed by the interactive advertisement exposure application 4.

12. The system for outputting linked advertisement of claim 1, wherein the exposure index is an index computed based on a descending order of cost-per-click (CPC) price, a descending order of a product selling rate, and a descending order of an amount of accumulation reward money, and the advertisement interaction control server 10 monitors the web browser and controls the interactive advertisement exposure application 4, so that an interactive advertisement having higher exposure index is exposed more frequently than the interactive advertisement having lower exposure index.

13. The system for outputting linked advertisement of claim 1, wherein the advertisement interaction control server 10 extracts a pre-registered advertisement information using a search database (DB) constructed in the advertisement interaction control server 10, without interacting with a search term input window of a search portal site.

14. The system for outputting linked advertisement of claim 1, wherein the advertisement interaction control server 10 determines whether an advertisement displayed in the search result display region 12 is an advertisement of an advertiser subscribed to an interactive advertisement display service, based on whether a URL of the advertisement displayed in the search result display region is pre-registered.

15. The system for outputting linked advertisement of claim 1, wherein in order for a plurality of interactive advertisement having predetermined exposure priority to be exposed at exposure frequency depending on the exposure priority, the advertisement interaction control server 10 counts the number of exposure of each interactive advertisement 30 to perform a control, so that less exposed interactive advertisement is more frequently extracted at the time of extracting the interactive advertisement.

16. The system for outputting linked advertisement of claim 5, wherein the interactive advertisement display region has arrows which are displayed thereon to display the next or previous interactive advertisement by the operation of the user, and a slide touch function which is set to be performed in the web browser.

17. The system for outputting linked advertisement of claim 5, wherein the interactive advertisement display region has arrows which are displayed at upper and lower portions to display an interactive advertisement matched to a next or previous related search term by the operation of the user, respectively, or a slide touch function in an upward direction or a downward direction which is set to be performed in the web browser.

18. The system for outputting linked advertisement of claim 6, wherein the advertisement display order is set so that a predetermined number of advertisement information are extracted, and the extracted advertisement information are displayed in a descending order of an amount of accumulated reward money.

19. The system for outputting linked advertisement of claim 6, wherein the advertisement display order is set so that a predetermined number of advertisement information are extracted, and the extracted advertisement information are displayed in a descending order of the exposure index obtained by applying an amount of accumulated reward money and a customer purchase rate.

20. The system for outputting linked advertisement of claim 6, wherein the advertisement display order is set so that a predetermined number of advertisement information are extracted, and the extracted advertisement information are displayed in such a manner that an advertisement information having highest exposure index is displayed with first priority, and the remainder including second priority are randomly displayed.

21. The system for outputting linked advertisement of claim 6, wherein the advertisement display order is set so that a predetermined number of advertisement information are extracted, and the extracted advertisement information are randomly displayed.

22. The system for outputting linked advertisement of claim 7, wherein the accumulated reward money is provided as the purchase subsidy when a product purchase signal of the user is generated, and the advertisement interaction control server 10 performs a control so that a predetermined amount of money is automatically accumulated at the time of reset of the accumulated reward money according to a setting request of an advertiser.

23. The system for outputting linked advertisement of claim 8, wherein the advertisement interaction control server 10 performs a control so that, when an interactive advertisement is displayed through a predetermine path in the interactive advertisement display region, an additional incentive reward money is displayed on a screen.

24. The system for outputting linked advertisement of claim 8, wherein the main interactive advertisement display region has arrows which are displayed to display the next or previous interactive advertisement by the operation of the user, or a slide touch function which is set to be performed in the web browser.

25. The system for outputting linked advertisement of claim 8, wherein when a signal indicating that a user selected different link information from a matched search term in the main interactive advertisement display region is received, the advertisement interaction control server 10 replaces an interactive advertisement to be displayed with an interactive advertisement matched to the newly selected link information, and transmits the interactive advertisement to the user terminal.

26. The system for outputting linked advertisement of claim 10, wherein the advertisement interaction control server 10 further comprises a processor 50 configured to determine a search term for each URL, which matches, registers and manages a URL value of the advertisement information displayed in the web browser and the search term.

27. The system for outputting linked advertisement of claim 10, wherein the advertisement interaction control server 10 further comprises a priority arrangement processor 52 configured to extract a search term matched to a URL value of advertisement information displayed in the web browser, and extract a predetermined interactive advertisement information which is matched to the search term and then registered, and arrange the interactive advertisement information in display order.

28. The system for outputting linked advertisement of claim 10, wherein the advertisement interaction control server 10 further comprises:
an exposure frequency computing processor 54 configured to compute exposure information of the interactive advertisement matched to the advertisement information displayed in the web browser; and
a controlling unit 48 configured to control a display of the interactive advertisement so that the interactive advertisement is exposed depending on a preset exposure index.

29. The system for outputting linked advertisement of claim 11, wherein a plurality of recommended search term information and information on a user uploading each recommended search term are registered in the advertisement interaction control server 10 to be further displayed in the web page for the recommended search terms.
